# EUROPÄISCHE PATENTSCHRIFT

(11) **EP 0 900 461 B1**
(45) Veröffentlichungstag und Bekanntmachung des Hinweises auf die Patenterteilung: **14.08.2002**
(21) Anmeldenummer: 98908004.9
(22) Anmeldetag: 29.01.1998
(51) Int. Cl.: H02G 1/12

(54) **ABISOLIERZANGE FÜR UMMANTELTE ELEKTRISCHE KABEL**
WIRE STRIPPER FOR SHEATHED ELECTRICAL CABLES
PINCE A DENUDER POUR CABLES ELECTRIQUES GAINES

(30) Priorität: 27.02.1997 DE 19707739
(43) Veröffentlichungstag der Anmeldung: 10.03.1999
(73) Patentinhaber: Krampe, Josef, 59387 Ascheberg 2 (DE)
(72) Erfinder: Krampe, Josef, 59387 Ascheberg 2 (DE)
(74) Vertreter: Hanewinkel, Lorenz, Dipl.-Phys.
(86) Internationale Anmeldenummer: EP9800459
(87) Internationale Veröffentlichungsnummer: WO9838713

(56) Entgegenhaltungen:
- DE-U- 8 517 665
- GB-A- 1 142 602

## Beschreibung

Die Erfindung bezieht sich auf eine Abisolierzange für ummantelte, elektrische Kabel, mit zwei um eine gemeinsame Schwenkachse gegeneinander entgegen einer Rückholfeder verschwenkbaren Zangenarmen mit Kabel-Ablängschneiden und Schneidmessern mit zugeordneten Klemmbacken zum Kabel-Abisolieren, wobei die Kabel-Ablängschneiden und die Schneidmesser mit den zugeordneten Klemmbacken im Abstand nebeneinander und parallel zueinander sowie in der gemeinsamen, quer zur Schwenkachse verlaufenden Zangen-Schließ-und-Öffnungsebene liegen.

In der GB 1,142,602 A ist eine derartige Abisolierzange beschrieben, bei der ein Ablängschneidebereich direkt neben den Schneidmesservertiefungen angeordnet ist. Somit wird auch beim Ablängschneiden die Isolation zwischen den Klemmbacken eingeklemmt, was das Schneiden des Drahtes behindert.

Weiterhin ist aus dem DE-GM 85 17 665 bekannt geworden, bei dem die Ablängschneiden im Abstand unterhalb der Zangenarm-Schwenkachse und die Abisoliermesser mit Klemmbacken im Abstand oberhalb der Zangen-Schwenkachse liegen.

Dabei wird das Kabel zum Ablängen in Längsrichtung der Zangen-Schwenkachse eingesteckt und das Kabel zum Abisolieren dann quer zur Längsachse in die Klemmbacken und Schneidmesser eingeführt, so daß ein umständliches Wechseln der Zange in der Handhabung bzw. des Kabels in der Einführrichtung vorgenommen werden muß.

Der Umsteckweg des Kabels vom Ablängen zum Abisolieren ist verhältnismäßig groß und die Bedienungsperson muß dabei die Zange in umständlicher Weise drehen bzw. das Kabel in ungünstiger Weise in der Winkelstellung umlegen, so daß hierbei keine rationelle Arbeitsweise gegeben ist.

Weiterhin sind die Schneidmesser zum Abisolieren des Kabels bei härteren Ummantelungen gegen Beschädigungen nicht geschützt, sondern hierbei wird dann ein überhöhter Druck ausgeübt der sich auf die Standzeit der Schneidmesser durch Beschädigungen nachteilig auswirkt.

Aufgabe der Erfindung ist es, eine nach der eingangs genannten Art aufgebaute Abisolierzange zu schaffen, die mit räumlich günstig zueinander angeordneten und ein bequemes Kabeleinlegen auf kurzem Weg ermöglichen Abläng- und Abisoliermitteln ausgestattet ist und ein schnelles, sicheres und messerschonendes Ablängen und Abisolieren zuläßt.

Diese Aufgabe wird erfindungsgemäß durch die kennzeichnenden Merkmale des Patentanspruches 1 gelöst.

Die sich daran anschließenden Unteransprüche beinhalten Gestaltungsmerkmale, welche vorteilhafte und förderliche Weiterbildungen der Aufgabenlösung darstellen.

Die Abisolierzange gemäß der Erfindung zeigt räumlich günstig zueinander angeordnete und ein bequemes, auf kurzen Wegen erfolgendes Kabeleinlegen ermöglichende Abläng- und Abisoliermittel und gewährleistet ein schnelles, sicheres und messerschonendes Ablängen und Abisolieren der Kabel.

Die Kabel- Ablängschneiden und die Abisolier-Schneidmesser mit den zugeordneten Klemmbacken sind im räumlich dichten Abstand zueinander und in derselben Kabeleinsteck- bzw. Einlegeebene in der Abisolierzange angeordnet, so daß bei gleichem Halt der Abisolierzange das Kabel in der gleichen Richtung und dem gleichen Halt für beide Funktionen in die Zange eingelegt werden kann.

Das Ablängen des ummantelten Kabels von einer Rolle erfolgt durch zwei gegeneinander verschiebbare messerartige Ablängschneiden und das Abisolieren der Kabel wird durch gegeneinander bewegbare Klemmbacken und zwei gegeneinander bewegbare Schneidmesser durchgeführt, die das Kabel zuerst einschneiden und dann in Kabellängsrichtung durch verschwenken den abisolierten Ummantelungsbereich abziehen.

Die Bewegung der Klemmbacken und der Schneidmesser wird von dem zweiten Zangenarm über eine Druckrolle und ein im ersten Zangenarm angeordnetes Kurvenstück gesteuert, welches nach dem Abisolieren die Klemmbacken und Messerschneiden sofort freigibt, so daß das Kabel ebenfalls sofort aus der Zange entnommen werden kann. Hierdurch wird ein äußerst schnelles und rationelles Kabelabisolieren erreicht.

Weiterhin ist in bevorzugter Weise das Kurvenstück in dem Halter in begrenzter Weise verschwenkbar angeordnet und steht unter Federspannung. Bei festerem Ummantelungsmaterial des Kabels ist demzufolge auch ein größerer Druck auf die beiden Zangenarme zum Abisolieren erforderlich, da die Messer die Abisolierung nicht vornehmen können und das Kabel in sich festklemmen. Hierbei tritt dann die Feder in Kraft, in dem durch die in der Steuerbahn des Kurvenstückes laufende Druckrolle diese eine ungünstige Stellung zur Kurvenbahn zum übermäßigen Druck hat und dadurch die Vorspannung der Druckfeder die auf das normale Abisolieren eingestellt ist, überschritten wird, so daß dann die Feder nachgibt und das Kurvenstück im Halter zurückweichen kann, und dabei durch Winkelverschwenkung dieses Kurvenstückes über die Druckrolle zurücklaufen und zurückschwenken kann, wodurch dann das noch nicht abisolierte Kabel sofort freigegeben wird und dadurch die Schneidmesser geschont und nicht beschädigt werden. Die Feder gibt somit die Kurvenbahn sofort frei, wenn der Druck durch die Zangenarme beim Abisolieren zu groß wird und die Zange in sich durch das härtere Ummantelungsmaterial beschädigen könnte.

Für die Kurvenstückbewegung und die Anordnung der Ablängschneiden sowie Messerschneiden mit Klemmbacken sind in einem Zangenarm Hebel vorgesehen, welche von der Druckrolle des zweiten Zangenarmes betätigt werden und die Verschiebe- und Schwenkbewegungen durchführen. Es muß somit der die Druckrolle zeigende Zangenarm lediglich gegen den als Hauptarm ausgebildeten Zangenarm bewegt werden und dann erfolgen die Abläng- und Abisoliervorgänge automatisch. Der die Hebel mit Kurvenstücken und den Messerschneiden sowie Klemmbacken aufnehmende Zangenarm ist in bevorzugter Weise kastenartig ausgebildet und wird bis auf die Einführungen für das Kabel zum Ablängen und Abisolieren von einem lösbaren Deckel verschlossen. Durch die Kastenform kann dieser Zangenarm aus Kunststoff hergestellt werden und zeigt dabei eine sehr hohe Stabilität. Die Abisolierzange hat auf Grund der Anordnung der Abläng- und Abisoliermittel zueinander und der Steuerung dieser Teile durch das Kurvenstück und die Hebel einen hohen Gebrauchswert erhalten und ermöglicht bei äußerst bequemer Handhabung ein rationelles Ablängen und Abisolieren ummantelter Kabel.

Außerdem ist durch die Ausführung der Abisolierung der Zange aus weitesgehend Kunststoff das Gewicht der Zange wesentlich gegenüber herkömmlichen Metallzangen verringert worden und somit auch wiederum die Handhabung verbessert worden. Die Kunststoffausführung der Abisolierzange ermöglicht desweiteren eine einfachere und kostengünstigere Zangenfertigung.

Auf den Zeichnungen ist ein Ausführungsbeispiel gemäß der Erfindung dargestellt, welches nachfolgend näher erläutert wird. Es zeigt:

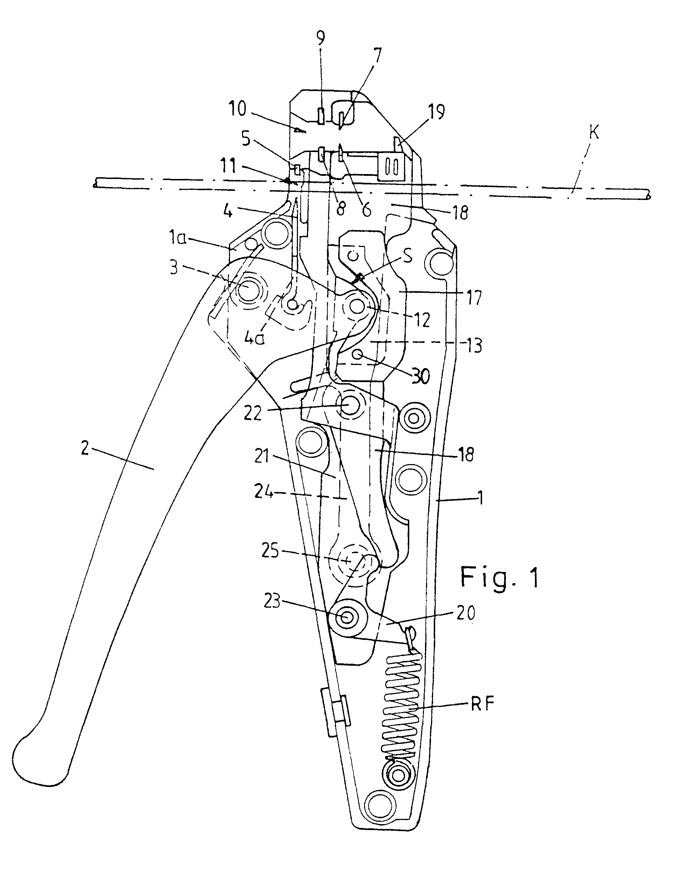

- Fig. 1: eine Draufsicht auf eine Abisolierzange mit zwei Zangenarmen, Ablängschneiden und Schneidemessern mit Klemmbacken sowie Kurvenstück und Hebel, in der Ausgangsstellung mit in eine Ablängeinführung eingelegtem Kabel und mit abgenommenen Deckel,

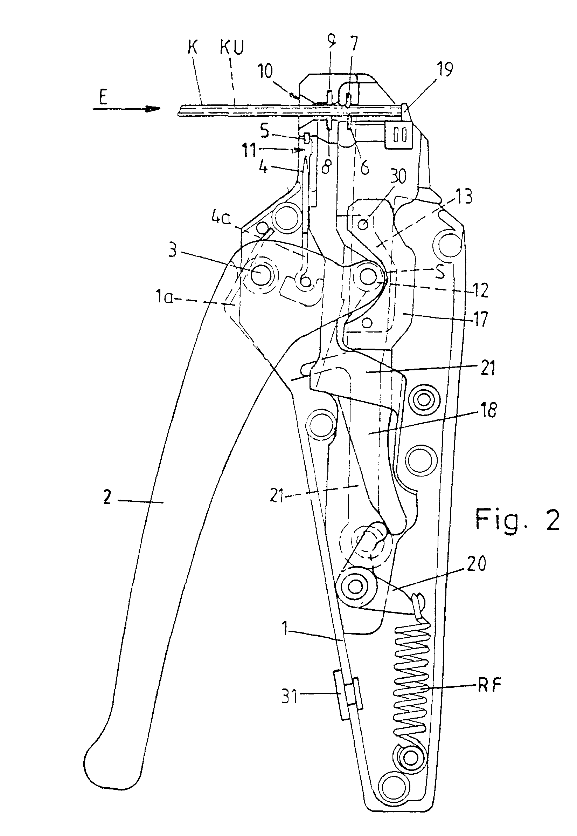

- Fig. 2: eine Draufsicht auf dieselbe Zange mit zum Abisolieren eingelegtem Kabel,

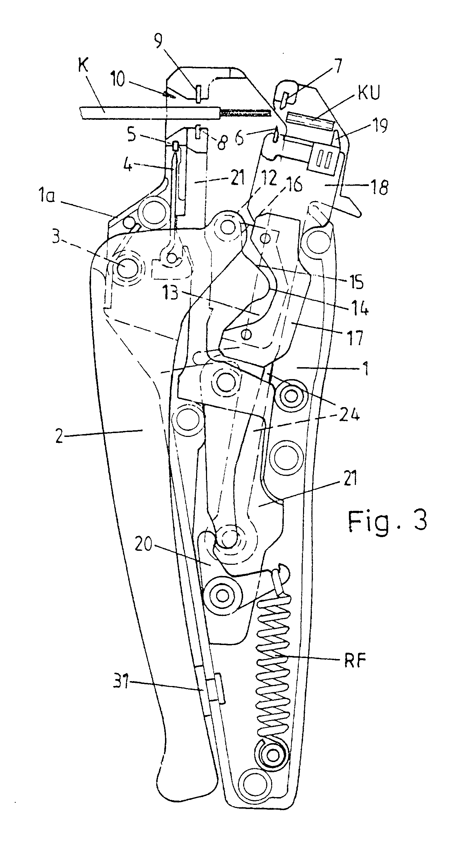

- Fig. 3: eine Draufsicht auf dieselbe Zange in der abisolierten Zangenstellung,
- Fig. 4 bis 6: Draufsicht auf Teilbereich der Zange mit schwenkbarem und federbelasteten Kurvenstück, in der Ausgangsstellung (Fig. 4), in der Klemmstellung beim Abisolieren (Fig. 5) und in der Ausweichstellung des Kurvenstückes zur Freigabe des Kabels (Fig. 6),
- Fig. 7 bis 12: Draufsicht und dazugehörige Seitenansichten von drei Zangenhebeln.

Die Abisolierzange für ummantelte (mit einer Isolierung KU ausgestattete), elektrische Kabel (K), weist zwei um eine gemeinsame Schwenkachse (3) gegeneinander entgegen einer Rückholfeder (RF) verschwenkbare Zangenarme (1, 2) mit Kabel-Ablängschneiden (4, 5) und Schneidmessern (6, 7) mit zugeordneten Klemmbacken (8, 9) zum Kabel-Abisolieren auf. Der Zangenarm (1) bildet dabei den Hauptarm, der alle Bauteile aufnimmt und auch den zweiten Zangenarm (2) schwenkbar hält; der zweite Zangenarm (2) bildet den Handgriff.
Die Kabel-Ablängschneiden (4, 5) und die Schneidmesser (6, 7) mit den zugeordneten Klemmbacken (8, 9) liegen im Abstand (A) nebeneinander in Zangen-Längsrichtung übereinander und parallel zueinander sowie in der gemeinsamen, quer zur Schwenkachse (3) verlaufenden Zangen-Schließ-und-Öffnungsebene.

Die Schneidmesser (6, 7) mit den zugeordneten Klemmbacken (8, 9) und die Ablängschneiden (4, 5) bilden zwischen sich parallele, die abzulängenden und abzuisolierenden Kabel (K) von derselben quer zur Schwenkachse (3) gerichteten Einsteckseite (E) bzw. im Schwenkachsen-Axialrichtung verlaufenden Einlegeseite aufnehmende Kabeleinführung (10, 11), die quer, vorzugsweise rechtwinklig zur Längsrichtung des Zangenarmes (1) und in Zangenarmbreite verlaufen.

In Kabel-Einsteckrichtung (E) liegen die Klemmbacken (8, 9) mit Abstand vor den Schneidmessern (6, 7) und die Ablängschneiden (4, 5) mit Abstand vor den Klemmbacken (8, 9).

Die Schneidmesser (6, 7) mit den Klemmbacken (8, 9) und die Ablängschneiden (4, 5) sind im kürzeren Zangenschenkel in Schenkel-Längsrichtung hintereinander und im Abstand zur Schwenkachse (3) in dem Zangenarm (1) angeordnet. Die Einführungen (10, 11) liegen somit in einem Endbereich des Zangenarmes (1).

An dem die Schneidmesser (6, 7) mit den Klemmbacken (8, 9) und die Ablängschneiden (4, 5) aufweisenden Zangenarm (1) ist der zweite Zangenarm (2) in einem seitlichen Zangenarm-Fortsatz (1a) um die Schwenkachse (3) gehalten. Der Zangenarm (2) wirkt mit einer im Abstand zur Schwenkachse (3) liegenden Druckrolle (12) mit einem verschieb- und verschwenkbaren, mit den Schneidmessern (6, 7) und den Klemmbacken (8, 9) gekoppelten Kurvenstück (13) zusammen.

Das Kurvenstück (13) weist eine aus einer nach innen gerichteten Teilkreiskurve (14), einer sich daran in Richtung Ablängschneiden (4, 5) nach außen erstreckenden flachen Bogenkurve (15) und einer nach außen und in Richtung Ablängschneiden (4, 5) verlaufenden Schrägkurve (16) gebildete Steuerbahn (S) auf.

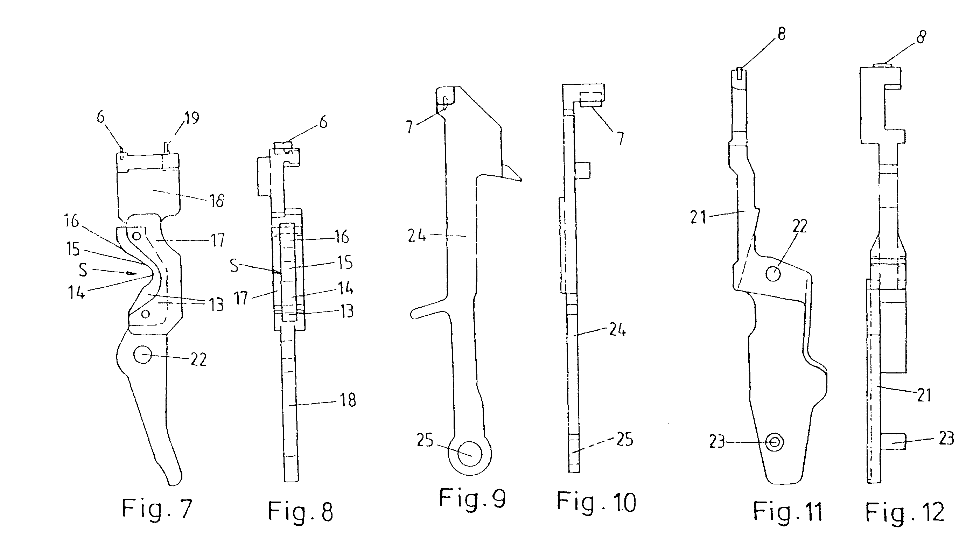

Das Kurvenstück (13) ist in einen Halter (17) festgelegt bzw. gehalten z. B. durch Stifte (30) im Halter (17) befestigt. Der Halter (17) ist an einem doppelarmigen, längsverschiebbaren und querverschwenkbaren Schub- und Schwenkhebel (18) angebracht vorzugsweise angeformt. Dieser erste Hebel (18) trägt an einem Hebelende ein Schneidmesser (6) und einen Längenanschlag (19) für das abzuisolierende Kabel (K); mit den anderen Längenende ist dieser Hebel (18) über einen Winkelhebel (20) mit der Rückholfeder (RF) vorzugsweise Zugfeder, gekoppelt. Der Hebel (18) mit Kurvenstück (13) ist aus Fig. 7 und 8 deutlich sichtbar.

Der Schub- und Schwenkhebel (18) ist auf einem zweiten Schubhebel (21) in der Schwenkachse (22) mit diesem längsverschiebbar und von diesen seitlich (quer) wegschwenkbar gelagert.
Dieser zweite Schubhebel (21) trägt an einem Längenende die mit der am Zangenarm (1) festen Gegenklemmbacke (9) zusammenwirkenden Klemmbacke (8), welche gegenüber der festen Klemmbacke (9) verschoben wird. Weiterhin nimmt dieser Schwenkhebel (21) um einen im anderen Längenende vorgesehenen Zapfen (23) den Winkelhebel (20) schwenkbar auf. Dieser Schwenkhebel (21) ist aus Fig. 11 und 12 deutlich zu ersehen. Unter dem Schub- und Schwenkhebel (18) und neben dem sowie teilweise unter dem Schubhebel (21) ist ein dritter Schwenkhebel (24) mit einem Ende um eine Schwenkachse (25), schwenkbar gelagert; der Schub- und Schwenkhebel (18) ist gegenüber dem Schwenkhebel (24) in Längsrichtung verschiebegeführt und mit diesen vom Schubhebel (21) seitlich wegschwenkbar; der Schwenkhebel (24) weist an seinem anderen Längenende das Gegen-Schneidmesser (7) auf, gegenüber dem das Schneidmesser (6) verschoben wird und beide Schneidmesser (6, 7) zum Abisolieren verschwenkt werden.

Der Schwenkhebel (24) ist aus Fig. 9 und 10 deutlich erkennbar.

Bei einer bevorzugten Variante ist das Kurvenstück (13) in dem Halter (17) einenends um eine Schwenkachse (26) gelagert und anderenendes in einer Zapfen-Schlitzführung (27, 28) begrenzt verschwenkbar geführt und steht unter Einwirkung einer Druckfeder (29). Die Druckfeder (29) ermöglicht es, das bei erhöhten Anpressdruck der Schneidmesser (6, 7) auf das abzuisolierende Kabel (K) das Kurvenstück (13) in den Kurvenstückhalter (17) hinein zurückweichen kann und über die Drückrolle (12) zurück unter Öffnen der Schneidmesser (6, 7) mit Klemmbacken (8, 9) und Freigabe des Kabels (K) fahren kann. Bei erhöhtem Anpressdruck steht die Druckrolle (12) gegen die Schrägkurve (16) an und das Kurvenstück (13) kann durch die Druckfeder (29) seine Winkelstellung verändern.

Die Schwenkachse (26) des Kurvenstückes (13) liegt mit parallelem Abstand zur Druckrolle (12) im den Einführungen (10, 11) abgewandte Ende und der Schlitz (28) mit Zapfen (27) sowie die Druckfeder (29) sind im den Einführungen (10, 11) zugewandten Ende des Halters (17) angeordnet; der Schlitz (28) verläuft im Querschwenkrichtung des Kurvenstückes (13).

Die Ablängschneide (5) ist fest am Zangenarm (1) gehalten und die zweite Ablängschneide (4) verschiebbar im Zangenarm (1) geführt und wird über eine im Zangenarm (2) gelenkig gelagerte Schubstange (4a) beim Verschwenken des Zangenarmes (2) längsverschoben.

Der die Hebel (18, 21, 20, 24), die Zugfeder (RF) und das Kurvenstück (13) aufnehmende Zangenarm (1) ist kastenartig ausgebildet und bis auf die Kabel-Einführungen (10, 11) durch einen lösbaren Deckel -nicht dargestellt- geschlossen ist.

Der kastenartige Zangenarm (1), dessen Deckel und der zweite einen Griff bildenden Zangenarm (2) sind jeweils einstückig aus Kunststoff hergestellt.

Zum Ablängen eines Kabels (K) von einer Rolle wird dieses in die Einführung (11) eingelegt und durch die zusammenfahrenden Ablängschneiden (4, 5) abgetrennt.

Zum Abisolieren wird dann das Kabel (K) in die Einführung (10) bis vor den Anschlag (19) gelegt und dann werden die Zangenarme (1, 2) zusammengeschwenkt, wobei die Klemmbacken (8, 9) das Kabel (K) festhalten und die Schneidmesser (6, 7) die Kabelummantelung (KU) durchschneiden. Der Zangenarm (2) wirkt beim Verschwenken mit seiner Druckrolle (12) auf das Kurvenstück (13) ein und schwenkt dieses mit dem Hebel (18) seitlich von den Klemmbacken (8, 9) weg, so daß die Kabelummantelung (KU) vom Kabeldraht abgezogen wird. Ist die Druckrolle (12) in der Steuerbahn (S) bis zur Kurve (16) gelaufen, schlägt der Zangenarm (2) an einem Anschlag (31) am anderen Zangenarm (1) an, der Abisoliervorgang ist beendet und der Zangenarm (2) wird druckentlastet, so daß der Hebel (18) mit Kurvenstück (13) zurückfahren und zurückschwenken kann und dabei das abisolierte Kabel (K) freigegeben wird.

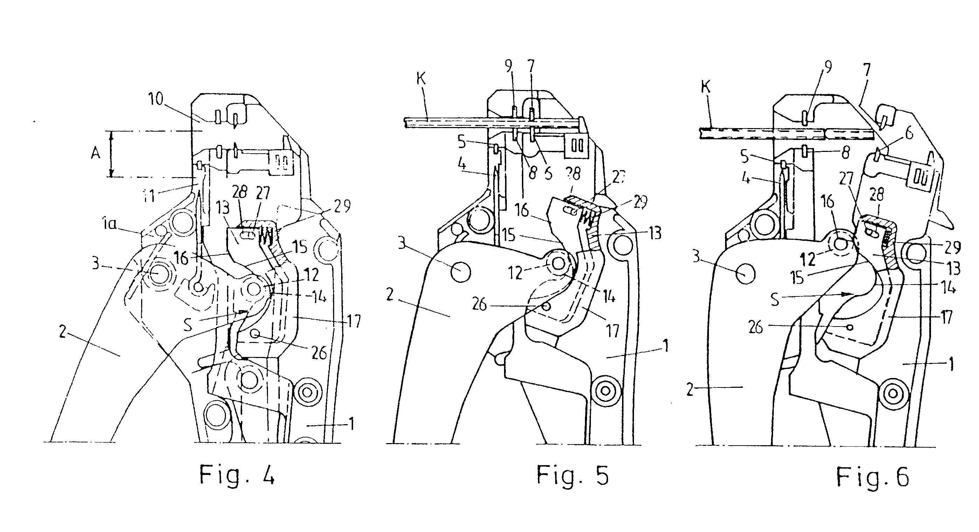

Die Druckfeder (29) bei der schwenkbaren Variante des Kurvenstückes (13) hat eine gewisse Vorspannung, die einem normalen Abisolieren entspricht (entgegensteht) und kein Einschwenken des Kurvenstückes (13) zuläßt. Ist nunmehr die Kabelummantelung härter, dann wird der Druck auf die Zangenarme (1, 2) größer, aber das Abisolieren kann nicht erfolgen, so daß das Kabel (K) zwischen den Messern (6, 7) verklemmt. In dieser Situation ist die Druckrolle (12) in einer ungünstigen Lage zur Steuerbahn (S), in dem die Druckrolle (12) gegen die Kurve (15) anliegt und weiter auf die Kurve (15) Druck ausübt und das Kurvenstück (13) in der Lage blockiert (Fig. 5).

Nunmehr tritt die Druckfeder (29) in Kraft, die durch den erhöhten Druck über die Vorspannung hinaus zusammengedrückt wird und dabei das Kurvenstück (13) in den Halter (17) um die Länge des Schlitzes (28) einschwenkt, so daß die Druckrolle (12) in den Bereich der Kurve (16) gelangen (weiterschwenken) kann und dann das Kurvenstück (13) über die Druckrolle (12) zurückfahren kann, wodurch die Messer (6, 7) und Klemmbacken (8, 9) öffnen und das nicht abisolierte Kabel (K) (Fig. 6) freigeben. Das Kurvenstück (13) fährt in die Ausgangslage (Fig. 4) zurück und der Zangenarm (2) wird druckentlastet.

Der Schwenkweg des Kurvenstückes (13) wird durch die Länge des Schlitzes (28) bestimmt und in der Ausgangsstellung liegt der Zapfen (27) an einem (gemäß Fig. 4 rechten) Schlitzende und in der eingeschwenkten Kurvenstückstellung an dem anderen (in Fig. 6 linken) Schlitzende an.

## Patentansprüche

1. Abisolierzange für ummantelte, elektrische Kabel (K), mit zwei um eine gemeinsame Schwenkachse (3) gegeneinander entgegen einer Rückholfeder (RF) verschwenkbaren Zangenarmen (1, 2) mit Kabel-Ablängschneiden (4, 5) und Schneidmessern (6, 7) mit zugeordneten Klemmbacken (8, 9) zum Kabel-Abisolieren, wobei die Kabel-Ablängschneiden (4, 5) und die Schneidmesser (6, 7) mit den zugeordneten Klemmbacken (8, 9) im Abstand nebeneinander und parallel zueinander sowie in der gemeinsamen, quer zur Schwenkachse (3) verlaufenden Zangen-Schließ-und-Öffnungsebene liegen, **dadurch gekennzeichnet, daß** die Ablängschneiden (4, 5) zu den Schneidmessern (6, 7) mit den benachbarten Klemmbacken (8, 9) in Richtung auf die Schwenkachse (3) in Schenkel-Längsrichtung hintereinander in einem Zangenarm (1) angeordnet sind.

2. Abisolierzange nach Ansprüch 1, **dadurch gekennzeichnet, daß** an dem die Schneidmesser (6, 7) mit den Klemmbacken (8, 9) und die Ablängschneiden (4, 5) aufweisende Zangenarm (1) der zweite Zangenarm (2) um die Schwenkachse (3) in einem seitlichen Zangenarm-Fortsatz (1a) gehalten ist und mit einer im Abstand zur Schwenkachse (3) liegenden Druckrolle (12) mit einem verschieb- und verschwenkbaren, mit den Schneidmessern (6, 7) und den Klemmbacken (8, 9) gekoppelten Kurvenstück (13) zusammenwirkt.

3. Abisolierzange nach einem der Ansprüche 1 bis 2, **dadurch gekennzeichnet, daß** das Kurvenstück (13) eine aus einer nach innen gerichteten Teilkreiskurve (14), einer sich daran in Richtung Ablängschneiden (4, 5) nach außen erstreckenden flachen Bogenkurve (15) und einer nach außen und in Richtung Abhängschneiden (4, 5) verlaufenden Schrägkurve (16) gebildete rinnenförmige Steuerbahn (S) aufweist.

4. Abisolierzange nach einem der Ansprüche 1 bis 3, **dadurch gekennzeichnet, daß** das Kurvenstück (13) in einen Halter (17) fest angeordnet ist, der an einem doppelarmigen, längsverschiebbaren und querverschwenkbaren Schub- und Schwenkhebel (18) angebracht, vorzugsweise angeformt ist, welcher an einem Hebelende ein Schneidmesser (6) und einen Längenanschlag (19) für das abzuisolierende Kabel (K) hat und mit den anderen Längenenden über einen Winkelhebel (20) mit der Rückholfeder (4) gekoppelt ist.

5. Abisolierzange nach einem der Ansprüche 1 bis 4, **dadurch gekennzeichnet, daß** der Schub- und Schwenkhebel (18) auf einem zweiten Schubhebel (21) in einer Schwenkachse (22) mit diesem Längsverschiebbar und von diesen seitlich (quer) wegschwenkbar gelagert ist,
daß der zweite Schubhebel (21) an einem Längenende mit der am Zangenarm (1) festen Gegenklemmbacke (9) zusammenwirkende, gegenüber der festen Klemmbacke (9) verschiebbare Klemmbacke (8) trägt und in einem im anderen Längenende vorgesehenen Zapfen (23) den Winkelhebel (20) schwenkbar aufnimmt,
daß unter dem Schub- und Schwenkhebel (18) und neben dem sowie teilweise unter dem Schubhebel (21) ein dritter Schwenkhebel (24) mit einem Ende um eine Schwenkachse (25) schwenkbar gelagert ist,
daß der Schub- und Schwenkhebel (18) gegenüber dem Schwenkhebel (24) in Längsrichtung verschiebegeführt und mit diesen vom Schubhebel (21) seitlich wegschwenkbar ist
und daß der Schwenkhebel (24) an seinem der Schwenkachse (25) gegenüberliegenden Längenende das Gegen-Schneidmesser (7) aufweist, welches gegenüber dem Schneidemesser (6) verschiebbar ist und beide Schneidmesser (6, 7) zum Abisolieren verschwenkbar sind.

6. Abisolierzange nach einem der Ansprüche 1 bis 5, **dadurch gekennzeichnet, daß** das Kurvenstück (13) in dem Halter (17) einenends um eine Schwenkachse (26) gelagert und anderenends in einer Zapfen-Schlitzführung (27, 28) begrenzt verschwenkbar geführt und unter Einwirkung einer Druckfeder (29) gehalten ist, welche das Kurvenstück (13) bei erhöhten Anpressdruck der Schneidmesser (6, 7) auf das abzuisolierende Kabel (K) in den Kurvenstückhalter (17) hinein ausweichen und über die Druckrolle (12) unter Öffnen der Schneidmesser (6, 7) mit Klemmbacken (8, 9) und Freigabe des Kabels (K) zurücklaufen läßt.

7. Abisolierzange nach einem der Ansprüche 1 bis 6, **dadurch gekennzeichnet, daß** die Schwenkachse (26) des Kurvenstückes (13) mit parallelem Abstand zur Druckrolle (12) im den Einführungen (10, 11) abgewandte Ende und der Schlitz (28) mit Zapfen (27) sowie die Druckfeder (29) in dem den Einführungen (10, 11) zugewandten Ende des Halters (17) angeordnet sind und der Schlitz (18) in Querschwenkrichtung des Kurvenstückes (13) in demselben verläuft.

8. Abisolierzange nach einem der Ansprüche 1 bis 7, **dadurch gekennzeichnet, daß** der die Hebel (18, 20, 21, 24) und das Kurvenstück (13) aufnehmende Zangenarm (1) kastenartig ausgebildet und bis auf die Kabel-Einführungen (10, 11) durch einen lösbaren Deckel geschlossen ist.

9. Abisolierzange nach einem der Ansprüche 1 bis 8, **dadurch gekennzeichnet, daß** der kastenartige Zangenarm (1), dessen Deckel und der zweite einen Griff bildende Zangenarm (2) jeweils einstückig aus Kunststoff gebildet sind.

10. Abisolierzange nach einem der Ansprüche 1 bis 9, **dadurch gekennzeichnet, daß** die Ablängschneide (5) fest am Zangenarm (1) gehalten und die verschiebbare Ablängschneide (4) im Zangenarm (1) verschiebegeführt und mit dem Zangenarm (2) zur Schneidenverschiebung gelenkig gekoppelt ist.

## Claims

1. Wire stripper for covered electrical cable (K), with two tong arms (1, 2) which can be pivoted against one another around a common pivot axis (3) and against a return spring, with cutters (4, 5) for cutting off lengths of cable and cutting knives (6, 7) with clamping jaws (8, 9) assigned to them, for stripping the insulation off the cable, wherein the cutters (4, 5) for cutting of lengths of cable and the cutting knives (6, 7) with the clamping jaws (8, 9) assigned to them lie spaced alongside one another and parallel to one another, as well as in the common tong closing and opening plane that runs crosswise to the pivot axis (3),
**characterised in that**
in relation to the cutting knives (6, 7) with the neighbouring clamping jaws (8, 9), the cutters (4, 5) for cutting off lengths of cable are arranged behind one another, in one tong arm (1), in the direction towards the pivot axis (3) in the longitudinal direction of the leg.

2. Wire stripper in accordance with claim 2, **characterised in that** on that tong arm (1) which has the cutting knives (6, 7) with the clamping jaws (8, 9) and the cutters (4, 5) for cutting off lengths of cable, the second tong arm (2) is held around the pivot axis (3) in a lateral continuation (1a) of the tong arm, and [this second tong arm] acts together with a pressure roll (12) lying at a distance from the pivot axis (3) with a curved piece (13) which can be moved and pivoted and which is coupled to the cutting knives (6, 7) and the clamping jaws (8, 9).

3. Wire stripper in accordance with one of the claims 1 to 2, **characterised in that** the curved piece (13) has a channel-like guide track (S) that comprises a reference-circle curve (14) directed inwards, an arched curve (15) that extends outwards from that in the direction of the cutters (4, 5) for cutting off lengths of cable, and an oblique curve (16) running outwards in the direction of the cutters (4, 5) for cutting off lengths of cable.

4. Wire stripper in accordance with one of the claims 1 to 3, **characterised in that** the curved piece (13) is firmly held in a holder (17) which is fitted - preferably moulded on - to a double-armed pushing and pivoting lever (18) which can be pushed lengthways and pivoted crosswise and which at one lever end has a cutting knife (6) and a length limit stop (19) for the cable (K) that is to be stripped of insulation, and which with the other length ends is coupled to the restoring spring (4) [*sic*] via an angle lever (20).

5. Wire stripper in accordance with one of the claims 1 to 4, **characterised in that** the pushing and pivoting lever (18) is borne on a second pushing lever (21) such that it can be pushed lengthways in a pivot axis (22) with it, and can be pivoted away laterally (crosswise) from it;
that the second pushing lever (21) has, on one length end, a clamping jaw (8) which works together with the opposing clamping jaw (9) that is fixed in the tong arm (1) and which can be pushed relative to the fixed clamping jaw (9), and in a journal (23) provided in the other length end, receives the angle lever (20) in a pivoting manner;
that below the pushing and pivoting lever (18), and beside and partially below the pushing lever (21), a third pivot lever (24) is borne, such that with one end it can be pivoted around a pivot axis (25);
that the pushing and pivoting lever (18) is held such that it can be displaced in a longitudinal direction relative to the pivot lever (24), and can be pivoted away sideways with it [the pivot lever] from the pushing lever (21);
and that on its length end lying opposite the pivot axis (25), the pivot lever (24) has the opposing cutting knife (7), which can be pushed relative to the cutting knife (6), and both cutting knives (6, 7) can be pivoted for the purposes of stripping off insulation.

6. Wire stripper in accordance with one of the claims 1 to 5, **characterised in that** the curved piece (13) is held in the holder (17) such as to be borne on one end around a pivot axis (26), and borne at the other end in a limited pivoted manner in a journal slit guide (27, 28), and is held under the action of a pressure spring (29) which, in the event of increased contact pressure of the cutting knives (6, 7) on the cable (K) that is to be stripped of insulation, allows the curved piece (13) to escape into the curved piece holder (17) and to travel back via the pressure roll (12) when the cutting knives (6, 7) with clamping jaws (8, 9) are opened and the cable (K) is released.

7. Wire stripper in accordance with one of the claims 1 to 6, **characterised in that** the pivot axis (26) of the curved piece (13) is arranged, with a parallel distance to the pressure roll (12), **in that** end facing away from the entrances (10, 11); and the slit (28) with the journal (27), as well as the pressure spring (29), are arranged **in that** end of the holder (17) facing towards the entrances (10, 11); and the slit (18) runs in the cross-wise pivot direction of the curved piece (13), in the same.

8. Wire stripper in accordance with one of the claims 1 to 7, **characterised in that** the tong arm (1) which accommodates the levers (18, 20, 21, 24) and the curved piece (13) is designed in a box-like manner, and apart from the cable entrances (10, 11) it is closed off by a removable cover.

9. Wire stripper in accordance with one of the claims 1 to 8, **characterised in that** the box-like tong arm (1), its cover, and the second tong arm (2) which forms a handle, are in each case formed of plastic in one piece.

10. Wire stripper in accordance with one of the claims 1 to 9, **characterised in that** the cutter (5) for cutting off lengths is held firmly on the tong arm (1) and the movable cutter (4) for cutting off lengths is held in the tong arm (1) such that it can be displaced, and such that it is coupled in a jointed manner to the tong arm (2) for the purpose of cutter displacement.

## Revendications

1. Pince à dénuder les câbles électriques gainés (K), laquelle pince comporte deux bras (1, 2), qui pivotent sur un axe commun (3), à l'encontre l'un de l'autre, contre la force d'un ressort de rappel (RF), ainsi que des lames de coupe à longueur (4, 5) et des lames à dénuder (6, 7) avec mâchoires de serrage coordonnées (8, 9), les lames de coupe à longueur (4, 5) et les lames à dénuder (6, 7) avec les mâchoires de serrage coordonnées (8, 9) étant disposées parallèlement, à intervalle les unes des autres, dans le plan d'ouverture et de fermeture de la pince, lequel s'étend transversalement par rapport à l'axe de pivotement (3),
**caractérisée en ce que**
les lames de coupe à longueur (4, 5) et les lames à dénuder (6, 7) avec mâchoires de serrage (8, 9) avoisinantes sont logées, dans un bras (1) de la pince et disposées les unes derrière les autres, en direction de l'axe de pivotement (3), dans le sens longitudinal.

2. Pince à dénuder selon la revendication 1,
**caractérisée en ce que**
le deuxième bras (2) de la pince est relié au premier bras (1) de la pince, qui est équipé des lames à dénuder (6, 7) avec mâchoires de serrage (8, 9) et des lames de coupe à longueur (4, 5), et maintenu sur l'axe de pivotement (3) dans un prolongement (1a) latéral dudit bras de la pince et coopère avec un galet presseur (12), situé à distance de l'axe de pivotement (3) et une came (13) déplaçable et pivotante qui est accouplée aux lames à dénuder (6, 7) et aux mâchoires de serrage (8, 9).

3. Pince à dénuder selon la revendication 1 ou 2, **caractérisée en ce que**
la came (13) présente une voie de guidage (S) en forme de canal, qui comprend une courbe en fragment de cercle dirigée vers l'intérieur (14), suivie d'une courbe en forme d'arc qui s'étend vers l'extérieur et une courbe oblique qui s'étend en direction des lames de coupe à longueur (4, 5).

4. Pince à dénuder selon l'une des revendications 1 à 3,
**caractérisée en ce que**
la came (13) est installée fixement dans un support (17) qui équipe un levier de poussée et de pivotement (18) à deux bras, déplaçable dans le sens de la longueur et pivotant transversalement, ledit support étant préférentiellement formée à partir dudit levier dont l'une des extrémité est pourvue d'une lame à dénuder (6) et d'une butée (19) pour le câble à dénuder (K), tandis que l'autre extrémité est accouplée au ressort de rappel (RF) par l'intermédiaire d'un levier coudé (20).

5. Pince à dénuder selon l'une des revendications 1 à 4,
**caractérisée en ce que**
le levier de poussée et de pivotement (18) est monté sur un deuxième levier de poussée (21) et peut être déplacé avec celui-ci sur un axe de pivotement (22) et en être écarté (transversalement) par pivotement,
que l'une des extrémités longitudinales du levier de poussée (21) porte une mâchoire de serrage (8) qui coopère avec la mâchoire de serrage (9) fixe du bras (1) de la pince et peut être décalée par rapport à ladite mâchoire de serrage fixe (9), tandis que l'autre extrémité est pourvue d'un pivot (23) qui accueille le levier coudé, pivotant 20), qu'un troisième levier de pivotement (24) est monté sous le levier de poussée et de pivotement (18), à côté du levier de poussée (21) et, partiellement, sous ce dernier, ledit levier (24) pivotant, par l'une de ses extrémités, sur un axe de pivotement (25),
que le levier de poussée et de pivotement (18) peut être déplacé dans le sens de la longueur, par rapport au levier de pivotement (24) et pivoté latéralement, avec celui-ci, pour être éloigné du levier de poussée (21)
et que l'extrémité longitudinale du levier de pivotement (24), opposée à l'axe de pivotement (25), est équipée de la contre-lame (7) qui peut être déplacée par rapport à la lame (6), et ces deux lames (6, 7) pouvant pivoter lors de la dénudation.

6. Pince à dénuder selon l'une des revendications 1 à 5,
**caractérisée en ce que**
la came (13), logée dans le support (17), est montée, à l'une de ses extrémités, sur un axe de pivotement (26) et est guidée, à son autre extrémité, avec pivotement limité, dans un système tourillon-rainure (27, 28), ladite came (13) étant soumise à l'influence d'un ressort de pression (29) qui, lors d'une pression surélevée, exercée par les lames (6, 7) sur le câble (K) à dénuder, lui permet de dévier dans le support (17) et de revenir en position, à l'aide du galet presseur (12), lors de l'ouverture des lames (6, 7) et mâchoires de serrage (8, 9) et libération du câble (K).

7. Pince à dénuder selon l'une des revendications 1 à 6,
**caractérisée en ce que**
l'axe de pivotement (26) de la came (13) est disposé parallèlement au galet presseur (12) et à distance de celui-ci, dans l'extrémité du support (17) opposée aux ouvertures d'introduction (10, 11) tandis que la rainure (28) avec tourillon (27) ainsi que le ressort de pression (29) sont disposés dans l'extrémité du support (17) orientée vers lesdites ouvertures d'introduction (10, 11), la rainure (28) s'étendant dans la came (13), dans le sens de pivotement transversal de celle-ci.

8. Pince à dénuder selon l'une des revendications 1 à 7,
**caractérisée en ce que**
le bras (1) de la pince, qui accueille les leviers (18, 20, 21, 24) et la came (13) est conçu en forme de boîte et est fermé à l'aide d'un couvercle amovible, à l'exception des ouvertures (10, 11).

9. Pince à dénuder selon l'une des revendications 1 à 8,
**caractérisée en ce que**
la bras de pince (1) en forme de boîte, son couvercle et le deuxième bras (2) de la pince, qui forme une poignée, sont exécutés, chacun, d'une seule pièce, en matière plastique.

10. Pince à dénuder selon l'une des revendications 1 à 9,
**caractérisée en ce que**
la lame de coupe à longueur (5) est fixée au bras (1) de la pince et que la lame de coupe à longueur (4) mobile est conduite dans le bras (1) de la pince et est accouplée au bras (2) de celle-ci par articulation permettant le déplacement.
